Europäisches Patentamt

European Patent Office

Office européen des brevets

(11) Publication number: **0 241 896 B1**

# EUROPEAN PATENT SPECIFICATION

(45) Date of publication of patent specification: **25.03.92**

(51) Int. Cl.⁵: **A23J 1/02**, A23L 1/312, A23G 1/00

(21) Application number: **87105456.5**

(22) Date of filing: **13.04.87**

(54) **A water-binding and gelatinising agent prepared from defatted pork rind and a process for its preparation.**

(30) Priority: **17.04.86 DK 1757/86**

(43) Date of publication of application:
**21.10.87 Bulletin 87/43**

(45) Publication of the grant of the patent:
**25.03.92 Bulletin 92/13**

(84) Designated Contracting States:
**DE ES FR GB GR IT NL SE**

(56) References cited:
**GB-A- 1 106 593**
**LU-A- 68 129**
**US-A- 2 748 152**

(73) Proprietor: **Protein Foods Scandinavia A/S**
**Sundsnaes 33**
**DK-6300 Grasten(DK)**

(72) Inventor: **Meyer, Hans**
**Farrevej 31**
**Sjorring DK-8464 Galten(DK)**
Inventor: **Bak, Aage**
**Tornballevej 103**
**DK-8381 Mundelstrup(DK)**

(74) Representative: **Christensen, Aksel et al**
**BUDDE, SCHOU & CO. A/S Sundkrogsgade**
**10**
**DK-2100 Copenhagen O(DK)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a novel water-binding and gelatinising agent prepared from defatted pork rind as well as a process for its preparation.

GB Patent Specification No. 1,420,960 discloses a dehydrated, bacteriologically stable pork rind product having a water content of less than 15% by weight, a fat content of less than 20% by weight and a particle size of less than 5 mm, the dehydrated rind being capable of rehydration into a rind product. The dehydrated pork rind product is manufactured by drying fresh port rind to the desired water content at between 100 - 344°C with simultaneous removal of fat to the desired fat content, cooling and comminuting the product to the desired particle size, if necessary.

According to GB Patent Specification No. 1,420,960 the dehydrated rind product is substantially unable to gelatinise (i.e. form a gel) on subsequent rehydration. This means that on or after rehydration, substantially no gelatinisation will occur in any surrounding aqueous ambience. This is a consequence of the manufacture of the product.

The agent of the invention is obtainable from defatted pork rind by grinding the comminuted and possibly minced defatted pork rind, to which water and, if desired, edible salts may have been added, to a viscous, paste-like product, drying of the paste-like product on a heated drying surface at a temperature of from 100 to 190°C to a parchment-like film, removal of the parchment-like film from the drying surface and comminution and grinding of the parchment-like film to a powdered product. When no salts are added it contains protein in an amount corresponding to an N-content of 13.6 to 16.8 % by weight, 2-12% by weight of fat, 2-12% by weight of water and 0.5-3% by weight of ashes. The content of protein is determined by the content of nitrogen multiplied by 6.25.

The agent of the invention is preferably prepared from defatted pork rind having an approximate composition of 20% by weight of protein and 1% by weight of fat the remainder being water. The defatted pork rind being used as starting material in the preparation of the agent of the invention can be prepared as disclosed in US Patent Specification No. 2,748,152, e.g. by heating chopped rind together with water while liquefying the fat, separating the products and cleaning out the defatted pork rind by washing with water in centrifuges.

The process of the invention is characterized in that defatted pork rind having an approximate composition of 20% by weight of protein and 1% by weight of fat, the remainder being water, to which rind water and, if desired, edible salts, may have been added, is comminuted, possibly minced, whereafter the comminuted rind product is ground to a viscous, paste-like product, which is dried on a heated drying surface at a temperature of from 100 to 190°C to a parchment-like film, which is removed from the drying surface and comminuted and ground to a powdered product.

The process of the invention is easy and simple to carryout and provides a bacteriologically stable product being neutral in taste when no edible salts such as NaCl are added.

The agent of the invention possesses a number of advantageous properties making it applicable in a variety of products, e.g. snacks, animal feedstuffs, such as feedstuffs for dogs and cats, and processed meat products.

On account of its water-binding and gelatinising ability the agent of the invention can be used for the regulation of the consistency of various products, e.g. yoghurt, custard, mixtures for breading, forcemeat, and cream of fish.

As the agent of the invention already at room temperature possesses unusual good water-binding and gelatinising ability the agent of the invention is therefore particularly suitable in fields of use, wherein heating would have a destroying effect, e.g. in the preparation of stabilized garlic extract, where the agent is acting as carrier, or in fields of use wherein the use of the agent does not aim at heating, e.g. instant powders for mousse, blancmange powders, powders for dressings and fishmeat.

Moreover, the agent of the invention may be subjected to a supplementary thermal treatment at temperatures of from 50° to 175°C whereby the immediate binding and gelatinising property by use in the cold is limited. Thereby a smaller increase of the viscosity by incorporation of the agent in the other ingredients is obtained. Upon heating of the finished mixture the water-binding and gelatinising effect is then released.

Carob flour is often used together with carrageenan in the preparation of sterilized feedstuffs for dogs and cats in order to provide a suitable consistency. This relatively expensive mixture can be replaced by the agent of the invention at a dosage of from 0.5 to 2% by weight.

Normally, polyphosphate is used to reduce the loss in weight due to cooking in meat and canned goods. Even if, today, polyphosphate is not considered as being injurious to health, there is a possibility that it will be forbidden in future. Moreover, the consumers express still stronger wishes that meat products are not allowed to contain artificial additives, and, thus, there is a need for an agent fulfilling the requirements made, such as the agent of the invention. When using the agent of the invention, the loss in weight due to cooking can be considerably reduced without the addition of phosphate.

Due to the water-binding properties and the ability to form a stable gel it is possible when using the agent of the invention in small amounts - from 0.3 to 0.5% - to enhance the consistency and cutting properties of various meat products considerably, e.g. hams, chopped ham and luncheon meat. When adding the agent of the invention in an amount of from 0.25 to 1% it is possible to prevent separation of liquid in vacuum packed sausages. Moreover, the gel strength is an important parameter in the preparation of form-pressed fish products, such as surimi being a known fish product in Japan and U.S.A. The addition of the agent of the invention enhances the consistency in the finished product considerably.

The agent of the invention possesses a surprisingly high gelatinising ability as compared to prior products. When tested according to British Standard 647:1969, TR 787, the agent of the invention forms a gel having a Bloom strength of 100 - 150 g/cm$^2$.

Recently there has been a greatly increasing interest in preparing processed meat products and hereby also in obtaining an optimum exploitation of the more regular meat products as well as the meat by-products. When using the agent of the invention in an amount of from 0.5 to 2%, small pieces can be "glued" together, and, simultaneously, the consistency (texture) of the finished product can be enhanced. This applies to meat as well as fish products, e.g. chicken nuggets and fish fingers.

In the process of the invention the defatted, comminuted pork rind is ground to a viscous, paste-like product, which can be carried to the drying surface by means of a pump. The grinding of defatted, comminuted pork rind can be made in a colloidal mill. It may be necessary to carry out a mincing of the defatted pork rind prior to the grinding on the colloidal mill in order to obtain a ground product which can be pumped to the drying surface. A smaller amoung of water and, if desired, edible salts may also be added.

The drying surface may be that of a drying drum, which is e.g. heated by means of stream or heated atmospheric air. The ground viscous, paste-like product is distributed on the drying surface in a suitable layer thickness and dried to a thin parchment-like layer, which is removed from the drying surface and processed to a powder of a suitable degree of fineness using the usual types of milling apparatus, dependent on the desired particle size of the finished product.

The agent of the invention is prepared from fresh defatted pork rind, and it possesses a composition and properties making it well-suited for use as a water-binding and gelatinising agent in the preparation of a broad variety of consumer products for human beings and animals.

The ground product is in the form of a fine powder. The powder is whitish, of a neutral taste and possesses a water-binding ability of >1000%, calculated on the weight of the powder, at room temperature.

Typical assay values of the powder prepared without addition of edible salts are stated below:

Nitrogen (N) 15.2 % by weight

Protein (N x 6.25) 95 % by weight

Fat 5 % by weight

Salt (NaCl) 0.5 % by weight

Ash 1.0 % by weight

Water 5 % by weight

pH 7

The product of the invention is biologically stable, and upon analyzing no occurrence of Escherichia coli, Salmonella or Clostridium are found after 48 hours at 37°C.

Typically, the agent of the invention possesses the following amino acid composition, expressed in % of the protein content:

Cystin 0.3

Aspartic acid 6.3

Methionine 1.0

Threonine 2.3

Serine 3.1

Glutamin acid 11.0

Glycine 15.3

Alanine 8.7

Valine 2.5

Iso-leucine 1.5

Leucine 2.7

Tyrosine 0.5

Phenylalanine 2.4

Histidine 2.9
Hydroxy-proline 10.3
Lysine 4.4
Arginine 7.3
Proline 11.5
Tryptophane <0.01

The agent of the invention has a long storage life and can be stored at room temperature in a dry environment for at least 12 months in the unopened packing.

The invention is further illustrated by means of the following Examples.

Example I

Defatted pork rind of a protein content of 20% and a fat content of 1% was taken out from the cold store (10°C) and minced in an ordinary household mincing machine. The minced rind product was ground in a colloidal mill (Fryma), whereby the temperature increased to 60 - 70°C. The ground rind product was a viscous paste, which was applied to the outer surface of a rotating drying drum by means of a monopump. The surface of the drum was 0.7 m². The application was made on the upper part of the drum, and the ground rind product was distributed on the drum by means of a system with 3 smaller rollers. The drying drum was heated by means of steam, the pressure of which may be varied up to 7 bars or more. When the drum had rotated three quarters turn, the dried and sterilised product was scraped off in the form of a parchment-like foil having a thickness of about 100 $\mu$m. The foil was chopped into pieces and subsequently ground to a fine, free-flowing powder having a particle size of <0.5 mm.

Example II

Example I was repeated except that a saturated aqueous solution of NaCl was added to the batch. The ground powdery end product comprises 63% by weight of NaCl and 37% by weight of protein.

Example III

Evaluation of the water-binding ability in forcemeat

3.5 kg of trimmings (25% fat content), 0.125 kg of NaCl and 0.075 kg of powder prepared according to Example I were mixed, and 3.0 kg of water were added. The mixture was processed in a high-speed mincing machine to forcemeat, which was filled into cans and either pasteurized (80°C for 1 hour) or sterilized (121°C for 1 hour). In a corresponding manner blank specimens were prepared, however without the addition of the powder prepared according to Example I. The separation of jelly in the forcemeat specimens was evaluated. The result is stated in the Table below.

TABLE

| Forcemeat specimen | Separation of jelly in % | |
| --- | --- | --- |
| | Pasteurized product | Sterilized product |
| Blank specimen | 3.2 | 7.1 |
| In admixture with powder | 1.7 | 2.7 |

Example IV

Evaluation of the water-binding ability in forcemeat

3.5 kg of trimmings (25% fat content) and 0.200 kg of powder prepared according to Example II were mixed, and 3.0 kg of water were added. The mixture was processed in a high-speed mincing machine to forcemeat, which was filled into cans and either pasteurized (80°C for 1 hour) or sterilized (121°C for 1 hour). The separation of jelly in the forcemeat specimens was evaluated. The result is stated in the Table below.

4

TABLE

|  | Pasteurized product | Sterilized product |
|---|---|---|
| Separation of jelly in % | 1.8 | 2.6 |

Example V

Evaluation of gel properties

A 10% aqueous suspension of the powder prepared according to Example I was formed, and the suspension was heated to 75°C for 40 min., cooled to 20°C and left standing for 12 hours. A gel was formed, the strength of which was measured by means of a penetrometer. The results are given below.

| 10% gel | |
|---|---|
| Ultimate strength (g/cm$^2$) | Ultimate strain (mm) |
| >3000 | None |

A 10% aqueous suspension prepared as described above, however without heating, gives the following results:

| Ultimate strength (g/cm$^2$) | Ultimate strain (mm) |
|---|---|
| 2620 | 10.5 |

Penetrometry: Height of specimen about 30 mm, the specimen was a cut out cylinder having a diameter of 8 mm, and the immersion rate was 1 mm/sec.

Example VI

Preparation of chocolate mousse

A powdered mousse mixture consisting of topping powder, sugar, powdered skim-milk as well as flavour additives were admixed with about 9% of the powder prepared according to Example I. Cold water was added (150 ml to 70 g of powdered mixture), and the mixture was whipped. The mixture was left standing in a refrigerator, and it set after 30 min.

| Ingredients: | |
|---|---|
| Topping powder | 35.4% |
| Sugar | 35.4% |
| Powder according to Example I | 8.9% |
| Cocoa | 7.1% |
| Powdered skin-milk | 13.2% |

**Claims**

1. A water binding and gelatinising agent obtainable from defatted pork rind by grinding the comminuted and possibly minced defatted pork rind, to which water and, if desired, edible salts may have been added, to a viscous, paste-like product, drying of the paste-like product on a heated drying surface at a temperature of from 100 to 190°C to a parchment-like film, removal of the parchment-like film from the drying surface and comminution and grinding of the parchment-like film to a powdered product.

**2.** The water-binding and gelatinising agent of claim 1, characterized in that the defatted pork rind which is used for its preparation has an approximate composition of 20% by weight of protein and 1% by weight of fat, the remainder being water.

**3.** The water-binding and gelatinising agent of claim 1 or 2 characterized in that it contains protein in an amount corresponding to an N-content of 13.6 to 16.8 % by weight, 2-12% by weight of fat, 2-12% by weight of water and 0.5-3% by weight of ashes.

**4.** A process for the preparation of an agent as claimed in claims 1 to 3, **characterized** therein that defatted pork rind having an approximate composition of 20% by weight of protein and 1% by weight of fat, the remainder being water, to which rind water and, if desired, edible salts may have been added, is comminuted, possibly minced, whereafter the comminuted rind product is ground to a viscous, paste-like product, which is dried on a heated drying surface at a temperature of from 100 to 190°C to a parchment-like film, which is removed from the drying surface and comminuted and ground to a powdered product.

**5.** The process as claimed in claim 4, **characterized** in that the drying surface is a drying drum, which is heated by steam.

**6.** The process as claimed in claims 4 or 5, characterized in that the product obtained is subjected to a supplementary thermal treatment at a temperature of from 50 to 175°C.

**7.** The use of the agent of any one of claims 1 to 3 for the preparation of food products, e.g. snacks, animal foodstuffs and processed meat products.

**8.** The use of the agent of anyone of claims 1 to 3 for the regulation of the consistency of food products.

**Revendications**

**1.** Agent fixant l'eau et gélatinisant qui peut être obtenu à partir de la couenne de porc dégraissée par broyage de la couenne de porc dégraissée réduite en fragments et éventuellement hachée, à laquelle de l'eau et, si on le souhaite, des sels commestibles peuvent avoir été ajoutés, pour former un produit visqueux analogue à une pâte, séchage du produit analogue à une pâte sur une surface de séchage chauffée à une température de 100 à 190°C pour former un film analogue à du parchemin, retrait du film analogue à du parchemin de la surface de séchage et réduction en fragments et broyage du film analogue à du parchemin pour former un produit pulvérulent.

**2.** Agent fixant l'eau et gélatinisant selon la revendication 1, caractérisé en ce que la couenne de porc dégraissée qui est utilisée pour sa préparation a une composition approximative de 20 % en poids de protéines et de 1 % en poids de graisse, le reste étant de l'eau.

**3.** Agent fixant l'eau et gélatinisant selon la revendication 1 ou 2, caractérisé en ce qu'il contient des protéines en une quantité correspondant à une teneur en N de 13,6 à 16,8 % en poids, 2 à 12 % en poids de graisse, 2 à 12 % en poids d'eau et 0,5 à 3 % en poids de cendres.

**4.** Procédé de préparation d'un agent selon les revendications 1 à 3, caractérisé en ce que de la couenne de porc dégraissée ayant une composition approximative de 20 % en poids de protéines et 1 % en poids de graisse, le reste étant de l'eau, couenne à laquelle de l'eau et, si on le souhaite, des sels commestibles peuvent avoir été ajoutés, est réduite en fragments, éventuellement hachée, après quoi le produit à base de couenne réduite en fragments est broyé pour former un produit visqueux analogue à une pâte qui est séché sur une surface de séchage chauffée à une température de 100 à 190°C pour former un film analogue à du parchemin qui est retiré de la surface de séchage, réduit en fragments et broyé pour former un produit pulvérulent.

**5.** Procédé selon la revendication 4, caractérisé en ce que la surface de séchage est un tambour de séchage qui est chauffé par de la vapeur.

**6.** Procédé selon la revendication 4 ou 5, caractérisé en ce que le produit obtenu est soumis à un traitement thermique supplémentaire à une température de 50 à 175°C.

7. Utilisation de l'agent selon l'une quelconque des revendications 1 à 3 pour la préparation de produits alimentaires, par exemple d'aliments pour repas légers d'aliments pour animaux et de produits élaborés à base de viande.

8. Utilisation de l'agent selon l'une quelconque des revendications 1 à 3 pour régler la consistance des produits alimentaires.

**Patentansprüche**

1. Wasserbinde- und Gelatinierungsmittel, erhältlich aus entfetteter Schweineschwarte durch Mahlen von zerkleinerter und gegebenenfalls gehackter entfetteter Schweineschwarte zu der gegebenenfalls Wasser und, wenn gewünscht, eßbare Salze gegeben wurden, zu einem viskosen, pastenförmigen Produkt, Trocknen des pastenförmigen Produktes auf einer erhitzten Trocknungsoberfläche bei einer Temperatur von 100 bis 190°C zu einer pergamentartigen dünnen Schicht, Entfernen der pergamentartigen dünnen Schicht von der Trocknungsoberfläche und Zerkleinern und Mahlen der pergamentartigen dünnen Schicht zu einem pulverförmigen Produkt`

2. Wasserbinde- und Gelatinierungsmittel nach Anspruch 1, dadurch gekennzeichnet, daß die entfettete Schweineschwarte, die zu dessen Herstellung verwendet wird, eine Zusammensetzung von etwa 20 Gew.-% Protein und etwa 1 Gew.-% Fett aufweist, wobei der Rest Wasser ist.

3. Wasserbinde- und Gelatinierungsmittel nach Anspruch 1 oder 2, dadurch gekennzeichnet, daß es Protein in einer Menge, die einem Stickstoffgehalt von 13,6 bis 16,8 Gew.-% entspricht, 2 bis 12 Gew.-% Fett, 2 bis 12 Gew.-% Wasser und 0,5 bis 3 Gew.-% Aschen enthält.

4. Verfahren zur Herstellung eines Mittels nach den Ansprüchen 1 bis 3, dadurch gekennzeichnet, daß man entfettete Schweineschwarte mit einer Zusammensetzung von etwa 20 Gew.-% Protein und etwa 1 Gew.-% Fett, wobei der Rest Wasser ist, zu welcher Schwarte gegebenenfalls Wasser und, wenn gewünscht, eßbare Salze gegeben wurden, zerkleinert, gegebenenfalls zerhackt, wonach das zerkleinerte Schwartenprodukt zu einem viskosen, pastenförmigen Produkt gemahlen wird, das auf einer erhitzten Trocknungsoberfläche bei einer Temperatur von 100 bis 190°C zu einer pergamentartigen dünnen Schicht getrocknet wird, die von der Trocknungsoberfläche entfernt, zerkleinert und zu einem pulverförmigen Produkt gemahlen wird.

5. Verfahren nach Anspruch 4, dadurch gekennzeichnet, daß die Trocknungsoberfläche eine Trockentrommel ist, die durch Dampf erhitzt wird.

6. Verfahren nach den Ansprüchen 4 oder 5, dadurch gekennzeichnet, daß das erhaltene Produkt einer weiteren thermischen Behandlung bei einer Temperatur von 50 bis 175°C unterworfen wird.

7. Verwendung des Mittels nach einem der Ansprüche 1 bis 3 zur Herstellung von Nahrungsmitteln, z.B. Snacks, Tiernahrungsmittel und behandelten Fleischprodukten.

8. Verwendung des Mittels nach einem der Ansprüche 1 bis 3 zur Einstellung der Konsistenz von Nahrungsmittelprodukten.